# EUROPEAN PATENT APPLICATION

(11) **EP 4 491 953 A1**
(43) Date of publication of application: **15.01.2025**
(21) Application number: 23781100.5
(22) Date of filing: 31.03.2023
(51) Int. Cl.: F24F 1/12

(54) **REFRIGERATION CYCLE DEVICE**

(30) Priority: 31.03.2022 JP 2022059342
(71) Applicant: DAIKIN INDUSTRIES, LTD., Osaka-shi, Osaka 530-0001 (JP)
(72) Inventor: HISAYAMA Kazushi, Osaka-shi, Osaka 530-0001 (JP); TSUMURA Yoshinobu, Osaka-shi, Osaka 530-0001 (JP)
(74) Representative: Hoffmann Eitle
(86) International application number: PCT/JP2023/013689
(87) International publication number: WO 2023/191092

(57) **Abstract**

A support leg (31) of a compressor (30) is supported by a first vibration isolating member (41). The first vibration isolating member (41) is supported by the first support member (51). The first support member (51) is supported by a second vibration isolating member (42). The second vibration isolating member (42) is supported by the second support member (52). The compressor (30) is covered with a soundproof box (60). The soundproof box (60) is supported by the second support member (52).

## Description

### TECHNICAL FIELD

The present disclosure relates to a refrigeration cycle apparatus.

### BACKGROUND ART

Patent Document 1 discloses a heat pump air conditioner. In this heat pump air conditioner, a compressor is mounted on a support member via a first vibration isolating member, the support member is placed in a machine body via a second vibration isolating member, and the compressor is hermetically covered with a soundproof box.

### CITATION LIST

### PATENT DOCUMENT

Patent Document 1: Japanese Unexamined Patent Publication No. 2005-241197

### SUMMARY OF THE INVENTION

### TECHNICAL PROBLEM

According to the invention of Patent Document 1, the soundproof box is placed on the support member supporting the compressor. Thus, the vibration of the compressor is disadvantageously transmitted to the soundproof box via the support member, and the soundproof box vibrates, generating vibration sound.

An object of the present disclosure is to keep the vibration of a compressor from being transmitted to a soundproof box.

### SOLUTION TO THE PROBLEM

A first aspect of the present disclosure is directed to a refrigeration cycle apparatus including a compressor (30) and a refrigerant circuit (2) to which the compressor (30) is connected. The refrigeration cycle apparatus includes: a first vibration isolating member (41) configured to support the compressor (30); a first support member (51) configured to support the first vibration isolating member (41), a second vibration isolating member (42) configured to support the first support member (51), a second support member (52) configured to support the second vibration isolating member (42); and a soundproof box (60) configured to cover the compressor (30). The soundproof box (60) is supported by the second support member (52).

In the first aspect, the compressor (30) is covered with the soundproof box (60), keeping radiated sound and vibration sound caused by the compressor (30) from leaking outside. The compressor (30) is supported by a two-layer antivibration structure made by stacking the first vibration isolating member (41) and the second vibration isolating member (42), and the soundproof box (60) is supported by the second support member (52) to which the vibration of the compressor (30) is less transmitted. This can keep the soundproof box (60) from vibrating.

A second aspect of the present disclosure is an embodiment of the refrigeration cycle apparatus of the first aspect. In the second aspect, the refrigeration cycle apparatus further includes: a second elastic member (65) configured to support the soundproof box (60), the soundproof box (60) is supported by the second elastic member (65), and the second elastic member (65) is supported by the second support member (52).

In the second aspect, the second elastic member (65) reduces the vibration transmitted from the compressor (30) to the second support member (52), reducing the transmission of the vibration to the soundproof box (60).

A third aspect of the present disclosure is an embodiment of the refrigeration cycle apparatus of the first or second aspect. In the third aspect, the refrigeration cycle apparatus further includes: a rigid member (35) provided on a pipe (26) connected to the compressor (30), and the rigid member (35) is supported by the first support member (51) or the second support member (52).

In the third aspect, the rigid member (35) reduces the vibration transmitted from the compressor (30) to the pipe (26), reducing the vibration sound generated by the vibration of the pipe (26).

A fourth aspect of the present disclosure is an embodiment of the refrigeration cycle apparatus of the third aspect. In the fourth aspect, the refrigeration cycle apparatus further includes a first elastic member (36) configured to support the rigid member (35), and the first elastic member (36) is supported by the second support member (52).

In the fourth aspect, the first elastic member (36) reduces, via the rigid member (35), the vibration transmitted from the compressor (30) to the pipe (26), reducing the transmission of the vibration to the second support member (52).

A fifth aspect of the present disclosure is an embodiment of the refrigeration cycle apparatus of any one of the first to fourth aspects. In the fifth aspect, the soundproof box (60) is provided with a pipe hole (63) through which a pipe (26) of the compressor (30) passes, and the refrigeration cycle apparatus further includes a first lid member (61) configured to be movable along a surface of the soundproof box (60) to close a gap between the pipe (26) and the pipe hole (63).

In the fifth aspect, the first lid member (61) can keep the radiated sound and the vibration sound caused by the compressor (30) from leaking from the pipe hole (63) of the soundproof box (60). Even when the pipe (26) vibrates in the pipe hole (63), the first lid member (61) moves along the surface of the soundproof box (60), keeping the gap closed.

A sixth aspect of the present disclosure is an embodiment of the refrigeration cycle apparatus of any one of the first to fourth aspects. In the sixth aspect, the soundproof box (60) is provided with a pipe hole (63) through which a pipe (26) of the compressor (30) passes, and the refrigeration cycle apparatus further includes a second lid member (62) configured to be fitted into the pipe hole (63) to close a gap between the pipe (26) and the pipe hole (63).

In the sixth aspect, the second lid member (62) can keep the pipe (26) and the soundproof box (60) from making contact with each other, and can also keep the radiated sound and the vibration sound caused by the compressor (30) from leaking out of the pipe hole (63) of the soundproof box (60).

A seventh aspect of the present disclosure is an embodiment of the refrigeration cycle apparatus of any one of the first to sixth aspects. In the seventh aspect, a component (5) of the refrigerant circuit (2) is disposed inside the soundproof box (60), and the component (5) includes an accumulator (25).

In the seventh aspect, the component (5) of the refrigerant circuit (2) is disposed inside the soundproof box (60), keeping the sound of the refrigerant flowing through the refrigerant circuit (2) from leaking outside. Further, the overall weight of the structure supported by the first vibration isolating member (41) and the second vibration isolating member (42) is increased, improving the effect of damping the vibration.

An eighth aspect of the present disclosure is an embodiment of the refrigeration cycle apparatus of any one of the first to seventh aspects. In the eighth aspect, a component (5) of the refrigerant circuit (2) is connected to a pipe (26) of the compressor (30), and the pipe (26) is disposed inside the soundproof box (60).

In the eighth aspect, the pipe (26) of the compressor (30) is disposed inside the soundproof box (60). Thus, even when the vibration sound is generated by the vibration transmitted from the compressor (30) to the pipe (26), the vibration sound can be kept from leaking outside.

A ninth aspect of the present disclosure is an embodiment of the refrigeration cycle apparatus of any one of the first to eighth aspects. In the ninth aspect, the soundproof box (60) is provided with a sound absorber (66).

In the ninth aspect, the sound absorber (66) provided for the soundproof box (60) can absorb the radiated sound and the vibration sound caused by the compressor (30), keeping the sounds from leaking outside.

### BRIEF DESCRIPTION OF THE DRAWINGS

FIG. 1 is a refrigerant circuit diagram of a refrigeration cycle apparatus of a first embodiment.
FIG. 2 is a front view illustrating a configuration of an outdoor unit.
FIG. 3 is a front view illustrating a support structure of a compressor.
FIG. 4 is a front view illustrating a first variation of the first embodiment.
FIG. 5 is a front view illustrating a second variation of the first embodiment.
FIG. 6 is a front view illustrating a third variation of the first embodiment.
FIG. 7 is a front view illustrating a fourth variation of the first embodiment.
FIG. 8 is a front view illustrating a fifth variation of the first embodiment.
FIG. 9 is a front view illustrating a sixth variation of the first embodiment.
FIG. 10 is a front view illustrating a seventh variation of the first embodiment.
FIG. 11 is a front view illustrating an eighth variation of the first embodiment.
FIG. 12 is a front view illustrating a ninth variation of the first embodiment.
FIG. 13 is a front view illustrating a configuration of a refrigeration cycle apparatus of a second embodiment.
FIG. 14 is a front view illustrating a first variation of the second embodiment.
FIG. 15 is a front view illustrating a second variation of the second embodiment.
FIG. 16 is a front view illustrating a third variation of the second embodiment.
FIG. 17 is a sectional plan view illustrating pipes penetrating a soundproof box of another embodiment.
FIG. 18 is a cross-sectional view in the direction of arrows on line A-Ain FIG. 17.
FIG. 19 is a side view illustrating a configuration of a gas-liquid separator.

### DESCRIPTION OF EMBODIMENTS

### <<First Embodiment>>

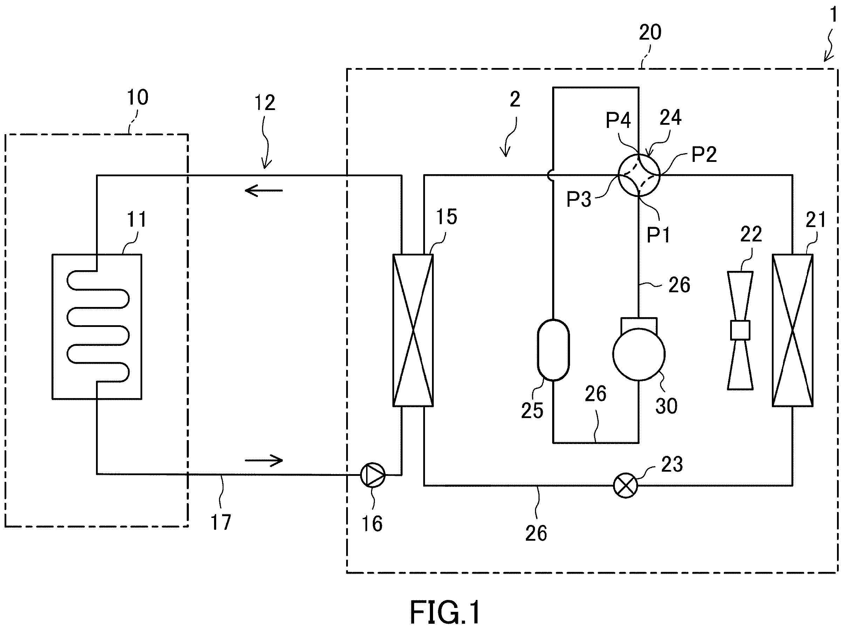

As illustrated in FIG. 1, a refrigeration cycle apparatus (1) includes an air conditioner unit (10) and an outdoor unit (20). The outdoor unit (20) includes a refrigerant circuit (2). The refrigerant circuit (2) is filled with, for example, a flammable natural refrigerant. The refrigerant circuit (2) circulates the refrigerant to perform a refrigeration cycle.

### <Air Conditioner Unit>

The air conditioner unit (10) includes an air conditioner (11). The air conditioner (11) is connected to a fluid circuit (12). A temperature adjustment fluid flows through the fluid circuit (12). The temperature adjustment fluid is, for example, water. The air conditioner (11) is installed in an indoor space to be air-conditioned.

The fluid circuit (12) includes the air conditioner (11), a fluid pump (16), and a water heat exchanger (15) connected by a fluid pipe (17). The fluid pump (16) circulates water in the fluid circuit (12).

### <Outdoor Unit>

The outdoor unit (20) includes the water heat exchanger (15), an outdoor heat exchanger (21), an outdoor fan (22), an outdoor expansion valve (23), a four-way switching valve (24), an accumulator (25), and a compressor (30). The outdoor heat exchanger (21), the outdoor expansion valve (23), the four-way switching valve (24), and the compressor (30) are connected by a pipe (26). The refrigerant flows through the pipe (26).

The outdoor heat exchanger (21) is, for example, a cross-fin type fin-and-tube heat exchanger. In the outdoor heat exchanger (21), heat exchange occurs between the refrigerant flowing through the outdoor heat exchanger (21) and air blown by the outdoor fan (22). The outdoor expansion valve (23) is, for example, an electronic expansion valve.

The compressor (30) is, for example, a rotary compressor such as a scroll compressor. The four-way switching valve (24) is connected to the pipe (26) on the discharge side of the compressor (30). The accumulator (25) is connected to the pipe (26) on the suction side of the compressor (30).

The pipe (26) of the refrigerant circuit (2) is connected to the water heat exchanger (15). The water heat exchanger (15) causes heat exchange between the refrigerant flowing through the pipe (26) and water flowing through the fluid pipe (17).

The four-way switching valve (24) has a first port (P1), a second port (P2), a third port (P3), and a fourth port (P4). The four-way switching valve (24) is in a state (indicated by the solid line in FIG. 1) where the first port (P1) and the third port (P3) are in communication with each other, and the second port (P2) and the fourth port (P4) are in communication with each other.

The air conditioner (11) is a heat exchanger that functions as a radiator of the temperature adjustment fluid circulating in the fluid circuit (12). The air conditioner (11) is an example of a target for temperature adjustment. The air conditioner (11) is specifically a device such as a radiator or a floor cooling/heating panel. For example, when the air conditioner (11) is a radiator, the air conditioner (11) is provided near a wall or the like in the room. For example, when the air conditioner (11) is a floor cooling/heating panel, the air conditioner (11) is provided under the floor or the like of the room.

In this embodiment, the refrigeration cycle apparatus (1) is described as a device including the refrigerant circuit (2) and the fluid circuit (12), but the refrigeration cycle apparatus (1) is not limited to this configuration. For example, the refrigeration cycle apparatus (1) may be an air conditioner including a single refrigerant circuit (2).

### <Internal Configuration of Outdoor Unit>

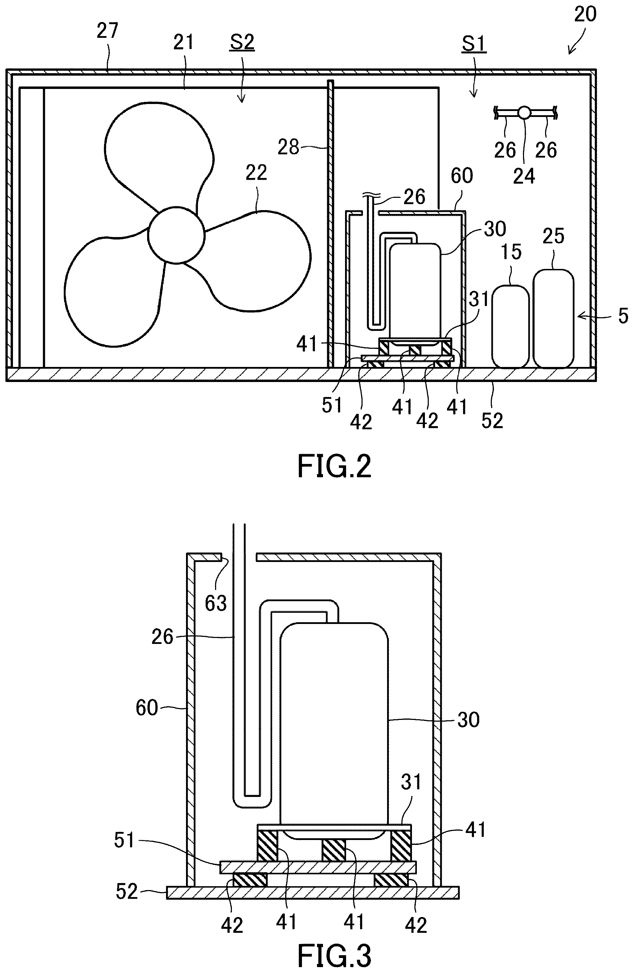

As illustrated in FIG. 2, the outdoor unit (20) includes a body casing (27). The body casing (27) is formed in a box shape. A partitioning member (28) is disposed upright in the body casing (27). The partitioning member (28) partitions the body casing (27) into a machine chamber (S 1) and a fan chamber (S2).

The machine chamber (S1) is a space in the body casing (27) on the right side of the partitioning member (28) in FIG. 2. The compressor (30), the water heat exchanger (15), the four-way switching valve (24), the accumulator (25), and the pipe (26) are placed in the machine chamber (S1).

The fan chamber (S2) is a space in the body casing (27) on the left side of the partitioning member (28) in FIG. 2. The outdoor fan (22) and the outdoor heat exchanger (21) are placed in the fan chamber (S2).

### <Arrangement of Compressor>

As illustrated in FIG. 3, the compressor (30) includes a support leg (31). The support leg (31) is supported by a plurality of first vibration isolating members (41). The first vibration isolating members (41) are made of, for example, rubber or urethane. The first vibration isolating members (41) are supported by a first support member (51). The first support member (51) is supported by a plurality of second vibration isolating members (42).

The second vibration isolating members (42) are made of, for example, rubber or urethane. The first vibration isolating members (41) and the second vibration isolating members (42) may be made of the same material or different materials, and may have the same spring constant or different spring constants. The second vibration isolating members (42) are supported by a second support member (52). In the example shown in FIG. 3, the second support member (52) is a bottom plate of the body casing (27). Thus, even when the compressor (30) vibrates while the refrigeration cycle apparatus (1) is in operation, the vibration is damped by the first vibration isolating members (41) and the second vibration isolating members (42) before being transmitted to the second support member (52).

A soundproof box (60) is formed in the shape of a box that opens downward. A pipe hole (63) is formed in an upper surface of the soundproof box (60). The pipe (26) of the compressor (30) is drawn out of the soundproof box (60) through the pipe hole (63). The soundproof box (60) is supported by the second support member (52).

According to the features of the first embodiment, the compressor (30) is covered with the soundproof box (60), keeping radiated sound and vibration sound caused by the compressor (30) from leaking outside. The compressor (30) is supported by a two-layer antivibration structure made by stacking the first vibration isolating members (41) and the second vibration isolating members (42), and the soundproof box (60) is supported by the second support member (52) to which the vibration of the compressor (30) is less transmitted. This can keep the soundproof box (60) from vibrating.

### -First Variation of First Embodiment-

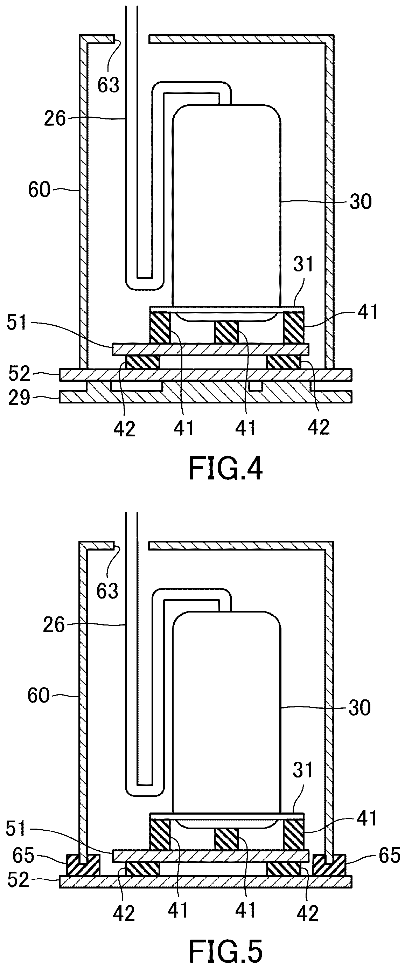

When the bottom plate (29) of the body casing (27) of the outdoor unit (20) has an uneven top surface as illustrated in FIG. 4, a second support member (52) different from the bottom plate (29) may be placed on the bottom plate (29).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52). The second support member (52) is supported by the bottom plate (29).

The soundproof box (60) is formed in the shape of a box that opens downward. The pipe hole (63) is formed in the upper surface of the soundproof box (60). The pipe (26) of the compressor (30) is drawn out of the soundproof box (60) through the pipe hole (63). The soundproof box (60) is supported by the second support member (52).

According to the features of the first variation of the first embodiment, the compressor (30) can be supported by the flat surface of the first support member (51) even when the bottom plate (29) has an uneven top surface.

### -Second Variation of First Embodiment-

As illustrated in FIG. 5, the soundproof box (60) may be supported by a second elastic member (65).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The soundproof box (60) is supported by the second elastic member (65). The second elastic member (65) is made of, for example, rubber or urethane. The second elastic member (65) is supported by the second support member (52). The pipe (26) of the compressor (30) is drawn out of the soundproof box (60) through the pipe hole (63).

According to the features of the second variation of the first embodiment, the second elastic member (65) reduces the vibration transmitted from the compressor (30) to the second support member (52), keeping the vibration from being transmitted to the soundproof box (60).

### -Third Variation of First Embodiment-

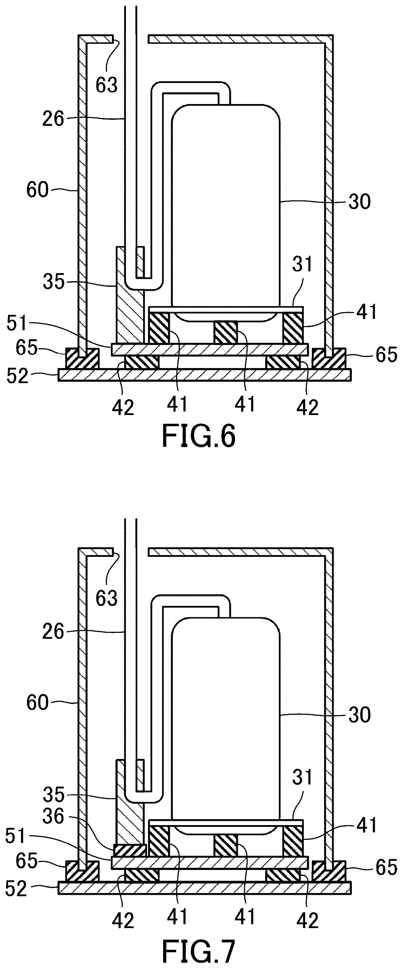

As illustrated in FIG. 6, a rigid member (35) may be provided on the pipe (26) of the compressor (30).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The pipe (26) is connected to the compressor (30). The pipe (26) is formed of, for example, a copper pipe. The pipe (26) is provided with the rigid member (35). The rigid member (35) is made of a material that is more rigid than the pipe (26). The rigid member (35) is made of, for example, a metal material having a specific gravity of 2.5 or more. The rigid member (35) is supported by the first support member (51).

The soundproof box (60) is supported by the second elastic member (65). The second elastic member (65) is made of rubber or urethan. The second elastic member (65) is supported by the second support member (52). The pipe (26) of the compressor (30) is drawn out of the soundproof box (60) through the pipe hole (63).

According to the features of the third variation of the first embodiment, the rigid member (35) reduces the vibration transmitted from the compressor (30) to the pipe (26), reducing the vibration sound generated by the vibration of the pipe (26).

### -Fourth Variation of First Embodiment-

As illustrated in FIG. 7, the rigid member (35) may be supported by a first elastic member (36).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is made of rubber or urethan. The second elastic member (65) is supported by the second support member (52). The pipe (26) of the compressor (30) is drawn out of the soundproof box (60) through the pipe hole (63).

According to the features of the fourth variation of the first embodiment, the first elastic member (36) reduces, via the rigid member (35), the vibration transmitted from the compressor (30) to the pipe (26), reducing the transmission of the vibration to the second support member (52).

The second elastic member (65) reduces the vibration transmitted from the compressor (30) to the second support member (52), reducing the transmission of the vibration to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Fifth Variation of First Embodiment-

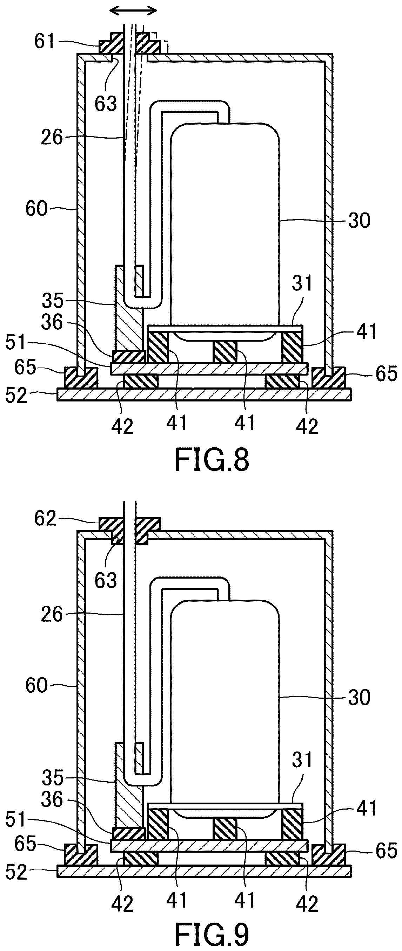

As illustrated in FIG. 8, a gap between the pipe (26) of the compressor (30) and the pipe hole (63) of the soundproof box (60) may be closed by a first lid member (61).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the fifth variation of the first embodiment, the first lid member (61) can keep the radiated sound and the vibration sound caused by the compressor (30) from leaking from the pipe hole (63) of the soundproof box (60). Even when the pipe (26) vibrates in the pipe hole (63), the first lid member (61) moves along the surface of the soundproof box (60), keeping the gap closed.

### -Sixth Variation of First Embodiment-

As illustrated in FIG. 9, a gap between the pipe (26) of the compressor (30) and the pipe hole (63) of the soundproof box (60) may be closed by a second lid member (62).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is supported by the second support member (52). The pipe (26) of the compressor (30) is drawn out of the soundproof box (60) through the pipe hole (63).

The second lid member (62) is attached to the pipe (26). The second lid member (62) is fitted into the pipe hole (63). The second lid member (62) closes the gap between the pipe (26) and the pipe hole (63). The second lid member (62) is formed of an elastically deformable member. The second lid member (62) is made of, for example, rubber or urethane. The second lid member (62) elastically deforms as the pipe (26) vibrates.

According to the features of the sixth variation of the first embodiment, the second lid member (62) can keep the pipe (26) and the soundproof box (60) from making contact with each other, and can also keep the radiated sound and the vibration sound caused by the compressor (30) from leaking out of the pipe hole (63) of the soundproof box (60).

### -Seventh Variation of First Embodiment-

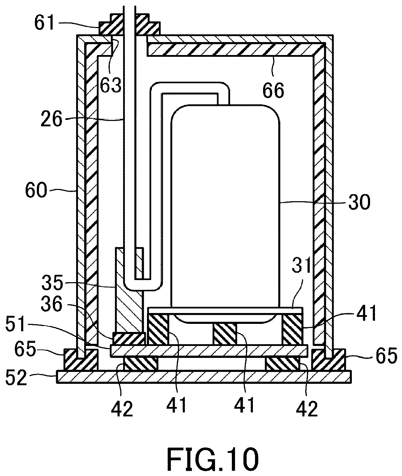

As illustrated in FIG. 10, the soundproof box (60) may be provided with a sound absorber (66).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

The sound absorber (66) is provided on an inner surface of the soundproof box (60). The sound absorber (66) may be provided on an outer surface of the soundproof box (60).

According to the features of the seventh variation of the first embodiment, the sound absorber (66) provided for the soundproof box (60) can absorb the radiated sound and the vibration sound caused by the compressor (30), keeping the sounds from leaking outside.

The soundproof box (60) provided with the sound absorber (66) is applicable to the other embodiments and variations in the same manner.

### -Eighth Variation of First Embodiment-

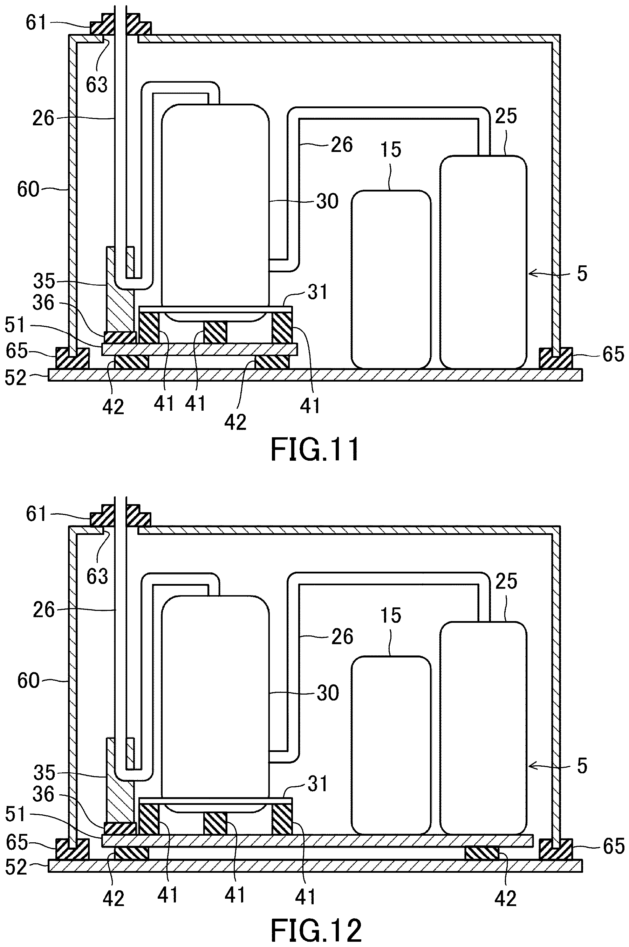

As illustrated in FIG. 11, components (5) of the refrigerant circuit (2) may be disposed in the soundproof box (60).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The components (5) of the refrigerant circuit (2) include the water heat exchanger (15) and the accumulator (25). The water heat exchanger (15) and the accumulator (25) are supported by the second support member (52). The accumulator (25) is connected to the compressor (30) by the pipe (26).

The components (5) of the refrigerant circuit (2) disposed in the soundproof box (60) may further include, for example, other components such as the four-way switching valve (24), and an electromagnetic valve, an electric valve, an economizer, and a muffler which are not shown, in addition to the water heat exchanger (15) and the accumulator (25).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The whole part of the pipe (26) connecting the compressor (30) and the accumulator (25) does not need to be disposed inside the soundproof box (60), and part of the pipe (26) may be drawn out of the soundproof box (60).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the eighth variation of the first embodiment, the components (5) of the refrigerant circuit (2) are disposed inside the soundproof box (60), keeping the sound of the refrigerant flowing through the refrigerant circuit (2) from leaking outside.

According to the features of the eighth variation of the first embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### -Ninth Variation of First Embodiment-

As illustrated in FIG. 12, the components (5) of the refrigerant circuit (2) may be supported by the first support member (51).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The components (5) of the refrigerant circuit (2) include the water heat exchanger (15) and the accumulator (25). The water heat exchanger (15) and the accumulator (25) are supported by the first support member (51). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the ninth variation of the first embodiment, the components (5) of the refrigerant circuit (2) are disposed inside the soundproof box (60), keeping the sound of the refrigerant flowing through the refrigerant circuit (2) from leaking outside. Further, the overall weight of the structure supported by the first vibration isolating members (41) and the second vibration isolating members (42) is increased, improving the effect of damping the vibration.

According to the features of the ninth variation of the first embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Second Embodiment>>

In the following description, the same reference characters designate the same components as those of the first embodiment, and the description will be focused only on the differences.

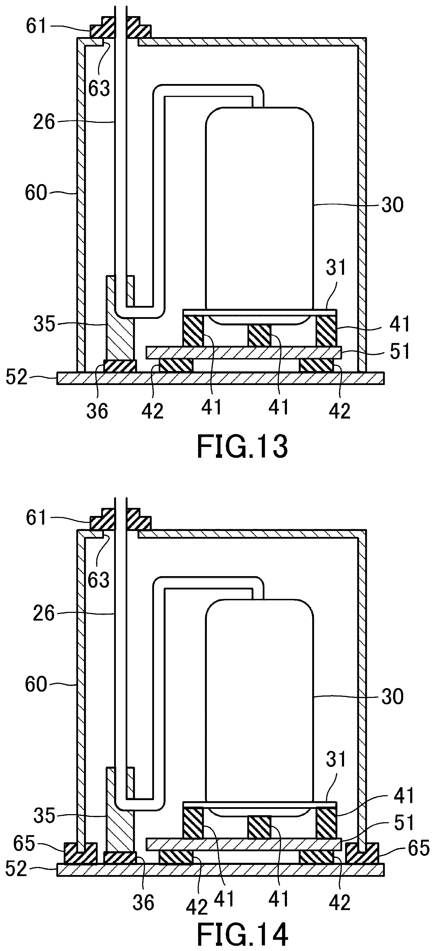

As illustrated in FIG. 13, the rigid member (35) may be supported by the second support member (52).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The soundproof box (60) is formed in the shape of a box that opens downward. The pipe hole (63) is formed in the upper surface of the soundproof box (60). The pipe (26) of the compressor (30) is drawn out of the soundproof box (60) through the pipe hole (63). The soundproof box (60) is supported by the second support member (52).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the second embodiment, the compressor (30) is supported by a two-layer antivibration structure made by stacking the first vibration isolating members (41) and the second vibration isolating members (42), reducing the vibration transmitted from the compressor (30) to the second support member (52) and the vibration transmitted from the compressor (30) to the pipe (26). This can reduce the vibration sound generated by the vibration of the second support member (52) and the pipe (26).

According to the features of the second embodiment, the rigid member (35) reduces the vibration transmitted from the compressor (30) to the pipe (26), keeping the vibration from being transmitted to the second support member (52).

According to the features of the second embodiment, the compressor (30) is covered with the soundproof box (60), keeping the radiated sound and the vibration sound caused by the compressor (30) from leaking outside.

### -First Variation of Second Embodiment-

As illustrated in FIG. 14, the soundproof box (60) may be supported by a second elastic member (65).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The soundproof box (60) is supported by the second elastic member (65). The second elastic member (65) is made of, for example, rubber or urethane. The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the first variation of the second embodiment, the second elastic member (65) reduces the vibration transmitted from the compressor (30) to the second support member (52), keeping the vibration from being transmitted to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Second Variation of Second Embodiment-

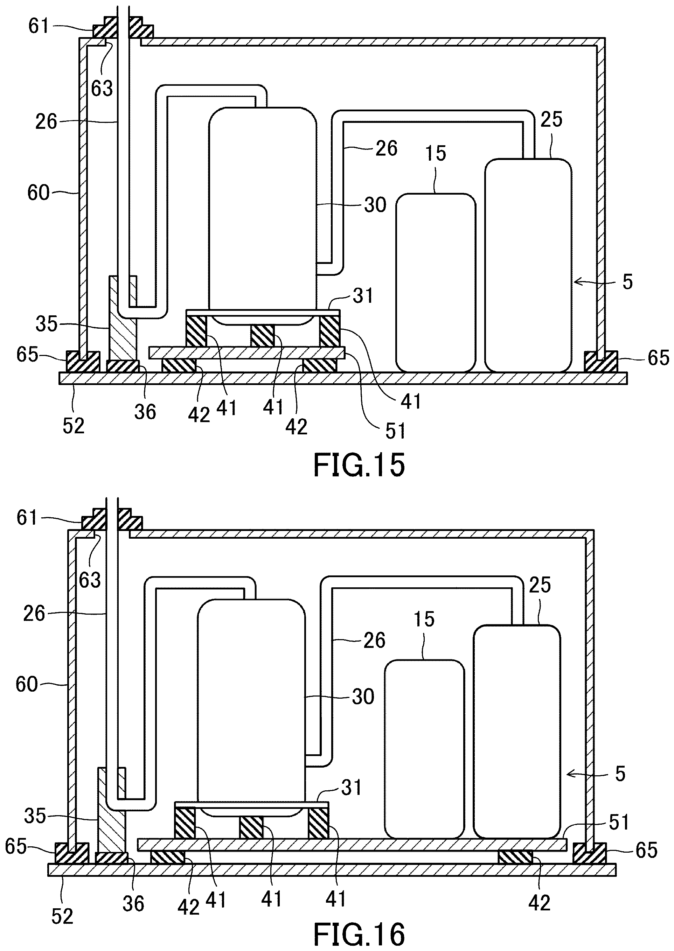

As illustrated in FIG. 15, components (5) of the refrigerant circuit (2) may be disposed in the soundproof box (60).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The components (5) of the refrigerant circuit (2) include the water heat exchanger (15) and the accumulator (25). The water heat exchanger (15) and the accumulator (25) are supported by the second support member (52). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the second variation of the second embodiment, the components (5) of the refrigerant circuit (2) are disposed inside the soundproof box (60), keeping the sound of the refrigerant flowing through the refrigerant circuit (2) from leaking outside.

According to the features of the second variation of the second embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### -Third Variation of Second Embodiment-

As illustrated in FIG. 16, the components (5) of the refrigerant circuit (2) may be supported by the first support member (51).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The components (5) of the refrigerant circuit (2) include the water heat exchanger (15) and the accumulator (25). The water heat exchanger (15) and the accumulator (25) are supported by the first support member (51). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the third variation of the second embodiment, the components (5) of the refrigerant circuit (2) are disposed inside the soundproof box (60), keeping the sound of the refrigerant flowing through the refrigerant circuit (3) from leaking outside. Further, the overall weight of the structure supported by the first vibration isolating members (41) and the second vibration isolating members (42) is increased, improving the effect of damping the vibration.

According to the features of the third variation of the second embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Other Embodiments>>

The above-described embodiments may be modified as follows.

In this embodiment, the pipe (26) of the compressor (30) passes through the pipe hole (63) formed in the soundproof box (60). However, the present invention is not limited to this configuration.

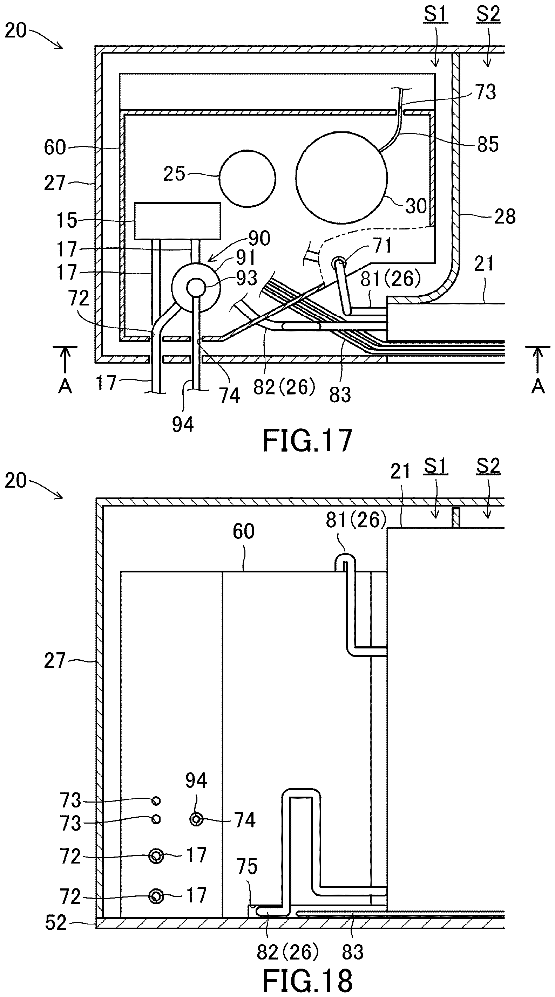

For example, as illustrated in FIGS. 17 and 18, a first pipe hole (71) may be formed in the upper surface of the soundproof box (60), and a first connection pipe (81) of the outdoor heat exchanger (21), which is an air heat exchanger, may pass through the first pipe hole (71). Here, the first connection pipe (81) is a pipe (26) connected to an outlet of an evaporator during heating operation.

Alternatively, a gap (75) may be provided between the lower edge of the soundproof box (60) and the second support member (52) serving as the bottom plate of the body casing (27), and a second connection pipe (82) of the outdoor heat exchanger (21) may pass through the gap (75). Here, the second connection pipe (82) is a pipe (26) connected to an inlet of the evaporator during heating operation. The second connection pipe (82) may have any structure of a subcooling path inlet, a flow divider inlet, and a pipe downstream of the flow divider. Note that a pipe hole (not shown) may be formed in a lower portion of a back wall surface of the soundproof box (60), and the second connection pipe (82) of the outdoor heat exchanger (21) may pass through the pipe hole.

Alternatively, a gap (75) may be provided between the lower edge of the soundproof box (60) and the second support member (52) serving as the bottom plate of the main casing (27), and a bypass pipe (83) for bypassing hot gas may pass through the gap (75). A pipe hole (not shown) may be formed in a lower portion of a side wall surface of the soundproof box (60), and the bypass pipe (83) may pass through the pipe hole. This can avoid melting of snow or ice-up on the second support member (52) which is the bottom plate of the body casing (27).

A water pipe hole (72) may be formed in a lower portion of the back wall surface of the soundproof box (60), and the fluid pipe (17) of the water heat exchanger (15) may pass through the water pipe hole (72).

Further, a wire hole (73) may be formed in a front wall surface of the soundproof box (60), and a wire (85) connected to various components contained in the soundproof box (60) may be drawn out of the soundproof box (60) through the wire hole (73).

In this case, it is preferable to attach a rubber bushing or a cable gland to the wire hole (73) to keep dust or any other foreign matters from entering the soundproof box (60) through the wire hole (73). The wire hole (73) may be formed in the back wall surface of the soundproof box (60).

When the refrigerant circuit (2) includes the gas-liquid separator (90), the second pipe hole (74) may be formed in the back wall surface of the soundproof box (60) so that a gas release pipe (94) of the gas-liquid separator (90) passes through the second pipe hole (74).

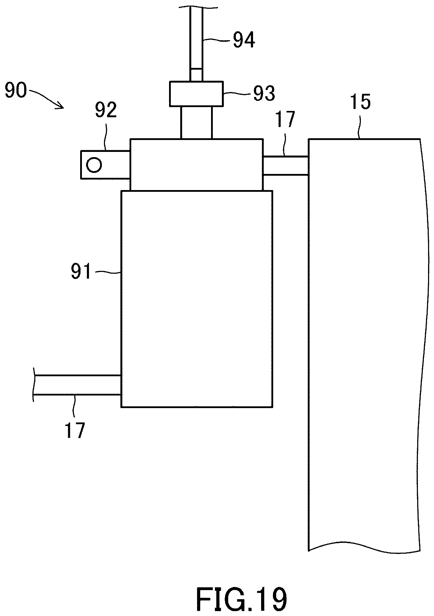

As illustrated in FIG. 19, the gas-liquid separator (90) includes a separator body (91), a pressure relief valve (92), a gas release valve (93), and a gas release pipe (94). The gas-liquid separator (90) is disposed between the water heat exchanger (15) and the air conditioner (11) in the fluid circuit (12).

The separator body (91) has a space into which water flows. The separator body (91) is, for example, a cylindrical container extending in the vertical direction. A fluid pipe (17) on the inlet side into which water having passed through the water heat exchanger (15) flows is connected to an upper portion of a side surface of the separator body (91). A fluid pipe (17) on the outlet side from which water flows toward the air conditioner (11) is connected to a lower portion of a side surface of the separator body (91).

The pressure relief valve (92) operates to release water in the separator body (91) to the outside when the pressure in the separator body (91) reaches or exceeds a predetermined value. This regulates the pressure in the separator body (91).

The gas release valve (93) discharges the gas flowing into the separator body (91) to the outside of the separator body (91). The gas release valve (93) includes, for example, a float-shaped valve body (not shown). The gas release valve (93) closes a discharge port (not shown) when the valve body is pushed up by water, and discharges gas from the discharge port when the gas flows into the separator body (91) to lower the liquid level and the valve body opens the discharge port.

Here, the gas flowing into the separator body (91) is a refrigerant which has leaked from the pipe (26) connected to the water heat exchanger (15) and has entered the fluid pipe (17) of the water heat exchanger (15). The gas-liquid separator (90) is provided to discharge the refrigerant that has entered the fluid pipe (17).

Although the configuration with only one gas release valve (93) is described in the example shown in FIG. 19, two gas release valves (93) may be provided.

The gas release pipe (94) is connected to the gas release valve (93). The gas release pipe (94) is, for example, a copper pipe, a resin pipe, or a hose. The gas release pipe (94) is drawn out of the soundproof box (60) through the second pipe hole (74) of the soundproof box (60).

In this embodiment, the rigid member (35) is provided at some midpoint of the pipe (26), but the present invention is not limited to this configuration. For example, the rigid member (35) may be a manifold having a flow path hole, and the pipe (26) may be connected to the flow path hole of the rigid member (35).

In this embodiment, the rigid member (35) is made of a block-shaped metal material, but the present invention is not limited to this configuration. For example, the accumulator (25) arranged away from the compressor (30) may be used as the rigid member (35). Specifically, the pipe (26) on the discharge side of the compressor (30) may be fixed to a side surface of the accumulator (25) so that the accumulator (25) reduces the vibration transmitted from the compressor (30) to the pipe (26) on the discharge side.

While the embodiments and variations have been described above, it will be understood that various changes in form and details can be made without departing from the spirit and scope of the claims. The elements of the embodiments, the variations thereof, and the other embodiments may be combined and replaced with each other. In addition, the expressions of "first," "second," "third," ... , in the specification and claims are used to distinguish the terms to which these expressions are given, and do not limit the number and order of the terms.

### INDUSTRIAL APPLICABILITY

As can be seen in the foregoing, the present disclosure is useful for a refrigeration cycle apparatus.

### DESCRIPTION OF REFERENCE CHARACTERS

- 1: Refrigeration Cycle Apparatus
- 2: Refrigerant Circuit
- 5: Component
- 25: Accumulator
- 26: Pipe
- 30: Compressor
- 35: Rigid Member
- 36: First Elastic Member
- 41: First Vibration Isolating Member
- 42: Second Vibration Isolating Member
- 51: First Support Member
- 52: Second Support Member
- 60: Soundproof Box
- 61: First Lid Member
- 62: Second Lid Member
- 63: Pipe Hole
- 65: Second Elastic Member
- 66: Sound Absorber

## Claims

1. A refrigeration cycle apparatus including a compressor (30) and a refrigerant circuit (2) to which the compressor (30) is connected, the refrigeration cycle apparatus comprising:
a first vibration isolating member (41) configured to support the compressor (30);
a first support member (51) configured to support the first vibration isolating member (41);
a second vibration isolating member (42) configured to support the first support member (51);
a second support member (52) configured to support the second vibration isolating member (42); and
a soundproof box (60) configured to cover the compressor (30),
wherein
the soundproof box (60) is supported by the second support member (52).

2. The refrigeration cycle apparatus of claim 1, further comprising:
a second elastic member (65) configured to support the soundproof box (60),
wherein
the soundproof box (60) is supported by the second elastic member (65), and
the second elastic member (65) is supported by the second support member (52).

3. The refrigeration cycle apparatus of claim 1 or 2, further comprising:
a rigid member (35) provided on a pipe (26) connected to the compressor (30),
wherein
the rigid member (35) is supported by the first support member (51) or the second support member (52).

4. The refrigeration cycle apparatus of claim 3, further comprising:
a first elastic member (36) configured to support the rigid member (35),
wherein
the first elastic member (36) is supported by the second support member (52).

5. The refrigeration cycle apparatus of any one of claims 1 to 4, wherein
the soundproof box (60) is provided with a pipe hole (63) through which a pipe (26) of the compressor (30) passes, and
the refrigeration cycle apparatus further comprises a first lid member (61) configured to be movable along a surface of the soundproof box (60) to close a gap between the pipe (26) and the pipe hole (63).

6. The refrigeration cycle apparatus of any one of claims 1 to 4, wherein
the soundproof box (60) is provided with a pipe hole (63) through which a pipe (26) of the compressor (30) passes, and
the refrigeration cycle apparatus further comprises a second lid member (62) configured to be fitted into the pipe hole (63) to close a gap between the pipe (26) and the pipe hole (63).

7. The refrigeration cycle apparatus of any one of claims 1 to 6, wherein
a component (5) of the refrigerant circuit (2) is disposed inside the soundproof box (60), and
the component (5) includes an accumulator (25).

8. The refrigeration cycle apparatus of any one of claims 1 to 7, wherein
a component (5) of the refrigerant circuit (2) is connected to a pipe (26) of the compressor (30), and
the pipe (26) is disposed inside the soundproof box (60).

9. The refrigeration cycle apparatus of any one of claims 1 to 8, wherein
the soundproof box (60) is provided with a sound absorber (66).
